# EUROPÄISCHE PATENTSCHRIFT

(11) **EP 2 329 153 B1**
(45) Veröffentlichungstag und Bekanntmachung des Hinweises auf die Patenterteilung: **17.02.2016**
(21) Anmeldenummer: 09801167.9
(22) Anmeldetag: 18.12.2009
(51) Int. Cl.: F15B 11/032, F15B 15/24, B25B 5/12

(54) **DURCH DRUCKLUFT ANGETRIEBENE, MIT DOPPELKOLBENFUNKTION AUSGRÜSTETE VORRICHTUNG ZUR VERWENDUNG IM KAROSSERIEBAU DER KFZ-INDUSTRIE**
APPARATUS DRIVEN BY COMPRESSED AIR AND EQUIPPED WITH DUAL PISTON FUNCTION FOR USE IN BODY CONSTRUCTION IN THE AUTOMOTIVE INDUSTRY
DISPOSITIF À ENTRAÎNEMENT PAR AIR COMPRIMÉ, ÉQUIPÉ D'UNE FONCTION DOUBLE PISTON ET DESTINÉ À ÊTRE UTILISÉ DANS LE DOMAINE DE LA CARROSSERIE POUR L'INDUSTRIE AUTOMOBILE

(43) Veröffentlichungstag der Anmeldung: 08.06.2011
(73) Patentinhaber: TÜNKERS MASCHINENBAU GmbH, 40880 Ratingen (DE)
(72) Erfinder: TÜNKERS, Josef-Gerhard, 40878 Ratingen (DE)
(74) Vertreter: Beyer, Rudi
(86) Internationale Anmeldenummer: PCT/EP2009/009106
(87) Internationale Veröffentlichungsnummer: WO 2010/127690

(56) Entgegenhaltungen:
- WO-A2-2005/044517
- DE-A1-102006 041 707
- DE-B3-102008 007 256
- US-B2- 6 612 557

## Beschreibung

Die Erfindung betrifft eine durch Druckluft angetriebene, energieeffiziente, mit Doppelkolbenfunktion ausgerüstete Vorrichtung zum Spannen, oder zum Klemmen, oder zum Zentrieren, oder zum Lochen, oder zum Schweißen, oder zum Clinchen, zur Verwendung im Karosseriebau der Kfz-Industrie, mit einer als Kolben-Zylinder-Einheit ausgebildeten Antriebseinheit, der die Druckluft zuführbar ist und einer sich koaxial daran anschließenden Kopfeinheit, in der eine Kniehebelgelenkanordnung an einer in der Kopfeinheit gelagerten ortsfesten Achse schwenkbeweglich angeordnet ist, wobei die Kniehebelgelenkanordnung mit einer mehrteiligen, längenverstellbaren, und in der gewünschten Länge auch arretierbaren sich in Achsrichtung der Antriebseinheit erstreckenden Kolbenstange verbunden ist und in dem Zylinder der Antriebseinheit mit axialem Abstand zueinander ein Ringkolben und ein Verstellkolben unter der Einwirkung der Druckluft längsverschieblich und dichtend geführt sind und der Ringkolben mit der Kniehebelgelenkanordnung durch ein Kolbenstangenteil über ein Gelenk gelenkbeweglich verbunden ist und der Verstellkolben mit einem zweiten Kolbenstangenteil gekuppelt ist, und dass in jeder Hubstellung und in jeder Einstellung des Ringkolbens und des Verstellkolbens zueinander der zwischen dem Ringkolben und dem Verstellkolben angeordnete, je nach Einstellung des Ringkolbens und des Verstellkolbens zueinander sich vergrößernde oder verkleinernde Zylinderraum ist.

### Stand der Technik

Kniehebelgelenkanordnungen der vorausgesetzten Gattung sind in vielfältigen, unterschiedlichen Konstruktionen vorbekannt.

Die auf die Anmelderin zurückgehende DE 198 24 579 C1 beschreibt eine derartigen Kniehebelspannvorrichtung, mit der Besonderheit, dass in einer Antriebseinheit zwei gegeneinander verstellbare Kolben gegenüber dem Zylinder abgedichtet, aber von dem Bodendeckel aus mittels eines Werkzeugs gegeneinander hubverstellbar ausgebildet sind. Dies geschieht zum Beispiel dadurch, dass durch eine Öffnung im Bodendeckel mittels eines Werkzeugs eine Schraube in beiden Richtungen gedreht werden kann, um dadurch den bodenseitigen Verstellkolben hubzuverstellen, was indirekt eine Verstellung des Ringkolbens, dem die Kolbenstange zugeordnet ist, zur Folge hat. Dadurch wird auch indirekt der Schwenkwinkel eines Spannarms geändert.

Eine ähnliche Konstruktion zeigt die EP 1 262 285 A2 und die US 6,612,557 B2.

Bei der DE 298 11 331 U1 wird eine Kniehebelspannvorrichtung dargestellt, bei welcher die Kolbenstange zweiteilig ausgebildet ist. Der eine Kolbenstangenteil ist über ein Kupplungselement mit der Kniehebelgelenkanordnung verbunden und als Schraube ausgebildet, die in eine mit Schraubgewinde versehene Sackbohrung der zweiten Kolbenstange mehr oder weniger weit einschraubbar ist. Dieses zweite Kolbenstangenteil ist mit einem in einem Zylinder längsverschieblich und dichtend geführten Kolben einstückig verbunden und überträgt dadurch die axiale Verstellkraft des Kolbens über die Kolbenstange auf das Kniehebelgelenk und damit auf einen Spannarm. Je nach Einschraublänge der beiden Kolbenstangenteile verändert sich der Schwenkwinkel des Spannarmes. Induktive Stellungsgeber sind ebenfalls vorhanden, wobei ein Stellungsgeber dem mit dem Kniehebelgelenk der Kniehebelgelenkanordnung zugeordneten Kolbenstangenteil und der andere als Fahne ausgebildete Stellungsgeber dem mit Innengewinde versehenen Kolbenstangenteil zugeordnet ist. Eine ähnliche Darstellung ist in der DE 698 10 413 T2, in der US 6,065,743, in der EP 0 908 272 B1 beschrieben. Auch die US 6,220,588 B1 zeigt eine derartige axiale Verstellung eines Verstellkolbens, während die US 6,616,133 B1 eine stufenweise Verstellung der Kolbenstange betrifft.

Die WO 2005/044517 A2 zeigt eine Vorrichtung gemäß der vorausgesetzten Gattung.

Nachteilig beim Antrieb derartiger mit Kniehebelgelenken versehenen Vorrichtungen, insbesondere Kniehebelgelenkspannvorrichtungen, ist, dass während des Leerhubes (Anstellhub) ein Großteil der Druckluft gar nicht benötigt wird, um Arbeit auszuführen, sondern lediglich der Überwindung der üblichen Reibungskräfte dient, während die auf dem gegenüberliegenden Ringraum befindliche Luftmenge entlüftet wird.

Deshalb wurde schon durch die DE 10 2006 041 707 B4 eine Lösung vorgeschlagen, bei welcher der Energieverbrauch sich erheblich, zum Beispiel um 40 %, reduzieren lässt, wenn beim Leerhub (Anstellhub) nur mit wesentlich geringerer Kraft der eigentliche Verstellzylinder und damit die Kolbenstange, die Kniehebelgelenkanordnung und das damit verbundene Vorrichtungsteil, zum Beispiel ein Spannarm, angetrieben wird. Erst beim Umsteuern, das heißt in Arbeitsstellung, wirkt die volle Druckluft auf den Verstellkolben und übt die volle Kraft aus. Während des Anstellhubes wird die auf der Kolbenringseite befindliche Druckluft auf die druckwirksame Fläche, also in den Zylinderraum für den Verstellkolben, geleitet, so dass diese Druckluft nicht verloren geht, sondern ihre Energie zum Antrieb des Verstellkolbens und der Kolbenstange benutzbar bleibt. Dadurch werden die Betriebskosten reduziert.

Dieser Gedanke wird auch in der ebenfalls auf die Anmelderin zurückgehende DE 10 2008 007 256 B3 weiterverfolgt, nämlich Energie so weit wie möglich beim Antrieb derartiger mit Kniehebelgelenken versehenen Vorrichtungen, insbesondere Kniehebelspannvorrichtungen, einzusparen. Man darf hierbei nicht außer Betracht lassen, dass zum Beispiel Kniehebelspannvorrichtungen oder dergleichen, in den Fertigungslinien bei der Produktion von Karosserien der Kfz-Industrie in großen Stückzahlen verwendet werden, so dass normalerweise große Druckluftmengen zum Einsatz kommen, die im Grunde genommen während des Leerhubes gar nicht benötigt werden. Erst unmittelbar mit der Einleitung des Krafthubes, das heißt, wenn die Vorrichtung Arbeit leistet, zum Beispiel der Spannarm Vorrichtungsteile klemmen soll, was im geringen Abstand vor dem Ende des Gesamthubes der Fall ist, wird dieser mit dem vollen Druckmitteldruck beaufschlagt. Mit oder kurz vor dem Beginn der vollen Druckentfaltung des Kolbens wird die im Ringraum befindliche geringe Druckluftmenge entlüftet. Ähnliches gilt auch für die WO 2007/128437 A1.

### Aufgabe

Der Erfindung liegt die Aufgabe zugrunde, eine durch Druckluft angetriebene Vorrichtung so zu gestalten, dass sich Antriebsenergie im beträchtlichen Maße einsparen lässt, bei gleichzeitig bauraumsparendem Kolbenstangenteil.

### Lösung

Die Aufgabe wird durch die in Patentanspruch 1 wiedergegebenen Merkmale gelöst.

### Einige Vorteile

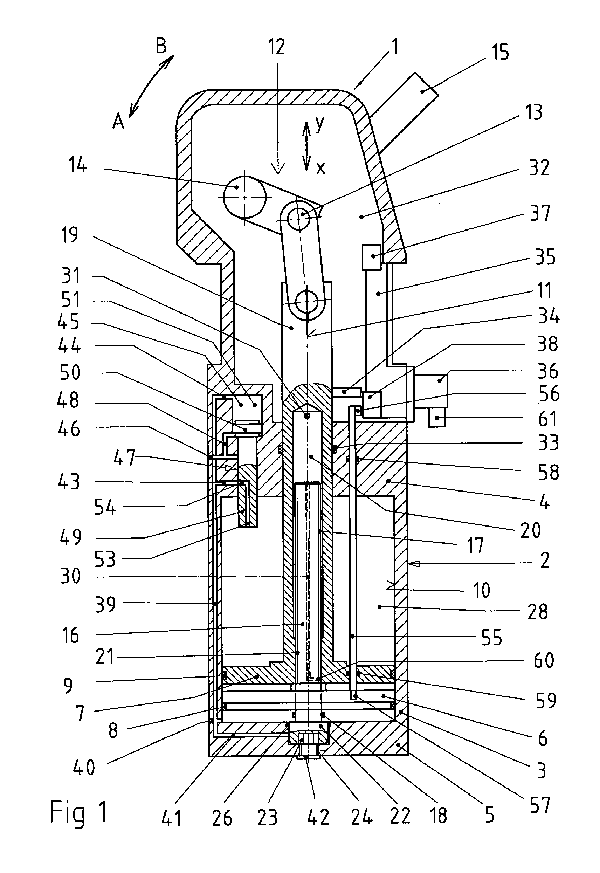

Bei der Lösung nach Fig. 1 ist der Kolben-Zylinder-Einheit ein Doppelkolben zugeordnet, von denen der eine als Ringkolben und der andere als Verstellkolben ausgebildet ist. Der Ringkolben ist mit einem Kolbenstangenteil verbunden, der getrieblich mit der Kniehebelgelenkanordnung gekuppelt ist und dadurch die axialen Verstellbewegungen in eine Schwenkbewegung auf das der Kniehebelgelenkanordnung zugeordnete Vorrichtungsteil, zum Beispiel einen Spannhebel zu übertragen. Der Ringkolben steuert eine Steuervorrichtung, während über den Verstellkolben mittels eines Werkzeugs, zum Beispiel eines Innensechskantschlüssels durch eine Öffnung im Bodendeckel des Zylinders das zweite Kolbenstangenteil, das zum Beispiel als Schraube ausgebildet ist, in die eine oder andere Richtung gedreht werden kann. Dadurch wird der wirksame Verstellhub des Ringkolbens und des Verstellkolbens verändert, was indirekt auch eine Veränderung des Schwenkwinkels der Kniehebelgelenkanordnung und des damit gekuppelten Vorrichtungsteils zur Folge hat. Somit lässt sich von außen aus zum Beispiel der Schwenkwinkel eines Spannarmes verändern.

Diese nützliche und leichte Anpassung des Schwenkwinkels durch Verstellung der axialen Länge der eigentlichen mehrteiligen Kolbenstange wird in erfinderischer Weise durch eine Steuervorrichtung ergänzt. Bis zu dem Zeitpunkt, in dem der Ringkolben nämlich diese Steuervorrichtung nicht umsteuert, was erst kurz vor Beendigung des Hubes geschieht, wird nur eine relativ geringe Fluidmenge benötigt, um den Zylinderraum des Verstellkolbens zu füllen, weil der Ringkolben während des Hubes die von ihm verdrängte Fluidmenge über ein Kanalsystem dem druckwirksamen Raum des Verstellkolbens zuleitet, so dass diese nicht verloren wird. Während des Anstellhubes braucht lediglich die durch das Volumen der Kolbenstange bestimmte Druckluftmenge herangeführt zu werden, um den Anstellhub auszuführen. Hierfür wird eine relativ geringe Energie benötigt, da nur die relativ geringen Reibungskräfte und - je nach Einbaulage - auch Gravitationskräfte durch eingebaute Vorrichtungsteile zu überwinden sind. Spannarbeit oder sonstige Arbeiten brauchen nämlich während des Anstellhubes (Leerhubes) noch nicht ausgeführt zu werden. Erst wenn die Steuervorrichtung durch den Ringkolben umgesteuert wird, was im kurzen Abstand vor Beendigung des Anstellhubes geschehen kann, wird die im Ringraum befindliche geringe Druckluftmenge entlüftet. Gleichzeitig wirkt der volle Druck der Druckluft auf die druckwirksame Kolbenfläche des Verstellkolbens ein und erzeugt dabei die hohe Arbeitskraft, die zum Beispiel zum Spannen, Clinchen, Schweißen, oder dergleichen benötigt wird.

Insgesamt ergibt sich damit eine spürbare Ersparnis an Betriebskosten, die je nach Größe der betreffenden Vorrichtung und des Kolbenhubes, zum Beispiel bei Kniehebelspannvorrichtungen, etwa 66 Prozent betragen kann. Beachtet man, dass in Fertigungslinien hunderte derartiger Vorrichtungen, zum Beispiel Kniehebelspannvorrichtungen, zum Einsatz kommen, sind die Einsparungen an Energie- und damit Betriebskosten beträchtlich.

Somit wird durch die Erfindung eine Vorrichtung mit Kniehebelgelenkanordnung bereitgestellt, bei der neben einfacher Verstellung des Schwenkwinkels, zum Beispiel eines Spannarmes, von außen aus ohne Zerlegung der Vorrichtung außerdem durch den reduzierten Verbrauch Betriebskosten eingespart werden.

Bei der zweiten Lösung des gleiches Problems gemäß **Patentanspruch 2** wird eine Abfragevorrichtung in Form eines Sets mit Mikroschalter, Endschalter oder Pneumatikschalter oder induktive Schalter bereitgestellt, bei der sich zwar ebenfalls von außen aus in einfacher Weise der Schwenkwinkel stufenlos verändern lässt, bei ökonomischem Antrieb der Vorrichtung, aber gleichzeitig sich mit der Veränderung des Schwenkwinkels der Kniehebelgelenkanordnung und damit zum Beispiel eines Spannarmes, die Bedämpfungsposition der Abfragevorrichtung einstellen lässt. Dies geschieht mit ein- und derselben Bewegung, eben der Drehbewegung zu einem Kolbenstangenteil, so dass nach Veränderung des Schwenkwinkels der Kniehebelgelenkanordnung keine längeren Einstell- oder Justierarbeiten der Sensorvorrichtung mehr erforderlich sind.

Der zwischen dem Ringkolben und dem Verstellkolben befindliche Zylinderraum ist über eine in der Kolbenstange versehene Bohrung und einen Kanal, der durch die Kolbenstange oder die Kolbenstangenteile verläuft, an den Innenraum des Kopfteils angeschlossen und damit an die Außenatmosphäre praktisch entlüftet, da dieser Innenraum nicht fluiddicht abgedichtet ist.

Der der druckwirksamen Seite des Verstellkolbens zugekehrte Zylinderraum ist über eine Drosselbohrung an einen Zuführkanal für das Fluid, zum Beispiel Druckluft angeschlossen. Dieser Zuführkanal ist seinerseits an das Kanalsystem angeschlossen, das auch zu der Ringseite des Ringkolbens führt und gleichzeitig mit der Bremskammer fluidleitend in Verbindung steht. Diese Bremskammer wird nach dem Eintauchen des Bremskolbens und Überstreichen einer Dichtung von dem Zylinderraum, der der druckwirksamen Seite des Verstellkolbens zugeordnet ist, abgeschlossen.

### Weitere erfinderische Ausgestaltungen

Weitere erfinderische Ausgestaltungen sind in den **Patentansprüchen 2** bis **9** beschrieben.

**Patentanspruch 2** beschreibt eine sehr vorteilhafte Ausführungsform, bei welcher keine außenliegenden Schlauchleitungen vorhanden sind, da die jeweiligen Umsteuer- und Zuführkanäle sich in den Wandungen der Vorrichtung selbst befinden. Diese können zum Beispiel im Bodendeckel, oder in der Wand angeordnet sein, die zwischen dem Kopfteil und dem eigentlichen Zylinder sind, oder aber in den Zylinderwandungen selbst verlaufen. Dadurch werden diese Kanäle nach außen hin gegen Beschädigung sowie Verschmutzung geschützt und verändern auch nicht die Gesamtabmessung der Vorrichtung, zum Beispiel von Kniehebelspannvorrichtungen.

Besonders vorteilhaft ist es, wenn der Steuerkolben in einer Wand angeordnet ist, die den druckwirksamen Zylinderraum des Ringkolbens von dem Innenraum des Kopfteils, zum Beispiel eines Spannkopfes einer Kniehebelspannvorrichtung, trennt. Dabei ergibt sich die Möglichkeit, dass der Anstellhub des Ringkolbens eher weitgehend ausgenutzt werden kann, bevor er die Steuervorrichtung, insbesondere den Steuerkolben, betätigt und diesen umsteuert, so dass gleichzeitig der volle Druckmitteldruck, insbesondere Luftdruck auf die druckwirksame Kolbenfläche des Verstellkolbens einwirkt und dann zum Beispiel die Spannkraft für den Spannhebel einer Kniehebelspannvorrichtung bewirkt - **Patentanspruch 3.**

Gemäß **Patentanspruch 4** ist der Verstellkolben mit einem Betätigungsteil verbunden, das an einem Ende eine Schaltfahne aufweist. Hierdurch ergibt sich der Vorteil, dass bei der Hubverstellung des Verstellkolbens gleichzeitig über das Betätigungsteil auch die Schaltfahne verstellt wird, so dass die Sensorvorrichtung gleichzeitig auf den neuen Hub eingestellt wird.

Das Betätigungsteil kann gemäß **Patentanspruch 5** als Stange ausgebildet sein, die den Ringkolben und die Wand, die den Innenraum des Kopfteils von dem Zylinder der Antriebseinheit trennt, abgedichtet durchgreift. Dadurch ergibt sich eine kompakte Bauform. Von außen sind diese Teile nicht erkennbar, da sie im Innern geschützt angeordnet sind.

Eine konstruktiv einfach zu verwirklichende besonders vorteilhafte Ausführungsform beschreibt **Patentanspruch 6,** während **Patentanspruch 7** sozusagen die Umkehrung der in Anspruch 6 beschriebenen Lösung darstellt.

Vorteilhafterweise ist gemäß **Patentanspruch 8** mit dem Verstellkolben an seiner dem Boden zugekehrten Seite ein Bremskolben angeordnet, der in Offenstellung in eine Bremskammer im Bodendeckel des Zylinders abgedichtet eingreift.

**Patentanspruch 9** beschreibt eine bevorzugte Ausführungsform.

In der Zeichnung ist die Erfindung - teils schematisch - beispielsweise veranschaulicht. Es zeigen:
- Fig. 1: eine als Kniehebelspannvorrichtung ausgebildete Vorrichtung gemäß der Erfindung im schematischen Längsschnitt in Offenstellung, wobei sich sowohl der Ringkolben als auch der Verstellkolben in einer Endstellung im Bereich des Bodendeckels befinden, und die beiden Kolbenstangenteile praktisch maximal ineinander eingeschraubt worden sind;
- Fig. 2: eine Zwischenstellung der Teile, bei welcher sich Verstellkolben und Ringkolben etwa in einem mittleren Hubbereich befinden und die Kolbenstangenteile teilweise ineinander eingeschraubt worden sind, und
- Fig. 3: eine Spannstellung einer Kniehebelspannvorrichtung, bei welcher die Kolbenstangenteile teilweise auseinandergeschraubt worden sind und der Ringkolben die als Steuerkolben ausgebildete Steuervorrichtung durch Längsverschiebung soeben umgesteuert hat.

In der Zeichnung ist die Erfindung in Anwendung auf eine Kniehebelspannvorrichtung veranschaulicht, die mit besonderem Vorteil im Karosseriebau der Kfz-Industrie zur Anwendung kommt. Generell ist mit dem Bezugszeichen 1 eine als Spannkopf ausgebildete Kopfeinheit bezeichnet, an der eine als Kolben-Zylinder-Einheit ausgebildete Antriebseinheit 2 angeschlossen ist. In der Zeichnung sind der Spannkopf 1 und die Antriebseinheit 2 materialmäßig einstückig dargestellt, sie können aber auch getrennte Baueinheiten bilden und zum Beispiel durch Schrauben (nicht dargestellt) miteinander verbunden sein. Sowohl die Kopfeinheit 1 als auch die Antriebseinheit 2, insbesondere deren Zylinder 3, können aus Leichtmetall, insbesondere aus einer Aluminiumlegierung, bestehen. Die Antriebseinheit 2 ist durch eine Wand 4 von der Kopfeinheit 1 getrennt dargestellt. Diese Wand 4 kann als Deckel ausgebildet sein, der ebenfalls statt materialmäßig einstückig - wie in der Zeichnung dargestellt - funktionell einstückig mit dem Zylinder 3 und/oder der Kopfeinheit 1 durch Schrauben oder dergleichen verbunden sein kann (nicht dargestellt). Der der Kopfeinheit 1 abgekehrte Boden des Zylinders 3 ist durch einen in der Zeichnung ebenfalls materialmäßig einstückig dargestellten Bodendeckel 5 abgeschlossen ausgebildet, der im Bedarfsfalle durch Schrauben oder dergleichen (nicht dargestellt) mit dem Zylinder 3 fluiddicht, insbesondere druckmitteldicht wie die Wand 4 mit dem Zylinder 3 verbunden sein kann. Entsprechende Dichtungen sind nicht dargestellt. Der Zylinder 3 kann zumindest im Inneren, bevorzugt aber auch außen, kreisrund, mithin zylindrisch, ausgebildet sein, es ist aber auch möglich, dem Zylinder eine davon abweichende Form, zum Beispiel eine im Querschnitt innen und außen rechteckförmige Form oder eine sogenannte flachovale oder elliptische Form zu geben. Dabei kann es sich zum Beispiel um Querschnittsformen handeln, bei welchen die Rechteckseiten durch Kreisbögen oder Geraden innen und außen gebildet werden, während die schmalen Seiten des Rechtecks durch Kreisbögen oder Kurvenabschnitte dargestellt sind. Auf diese Weise ergibt sich eine geringe Querabmessung, so dass sich derartige Vorrichtungen besonders eng in Fertigungslinien zueinander anbringen lassen, um zum Beispiel Schweißpunkte oder Klemmarme dicht nebeneinander aufsetzen können.

In dem Zylinder 3 sind zwei im axialen Abstand zueinander angeordnete Kolben angeordnet, von denen der eine, dem Bodendeckel 5 zugekehrte Kolben als Verstellkolben 6 und der andere, der Kopfeinheit 1 zugekehrte Kolben als Ringkolben 7 ausgebildet ist. Sowohl der Verstellkolben 6 als auch der Ringkolben 7 sind durch Dichtungselemente 8 bzw. 9 gegenüber einer Innenwand 10 des Zylinders 3 fluiddicht, insbesondere druckluftdicht, abgedichtet ausgebildet. Je nach Druckmitteldruckbeaufschlagung werden der Verstellkolben 6 und der Ringkolben 7 gleichsinnig und gemeinsam in Richtung der gemeinsamen Mittellinie 11, also koaxial entweder in Richtung X oder Y bewegt.

Wie aus der Zeichnung hervorgeht, ist eine Kolbenstange, die die Hubbewegungen in Richtung X bzw. Y des Verstellkolbens 6 einerseits und des Ringkolbens 7 andererseits auf eine Kniehebelgelenkanordnung 12 mittels eines Gelenks 13 überträgt, zweiteilig ausgebildet. Das Gelenk 13 ist vorliegend als Schwenkgelenk ausgebildet, das seine Bewegungen über Lenkerelemente der Kniehebelgelenkanordnung 12 auf eine gehäusefeste Achse 14 überträgt, mit der ein antriebsbewegliches Vorrichtungsteil, z. B. ein Spannarm 15, gekuppelt ist, das je nach Bewegung der Kniehebelgelenkanordnung 12 in Richtung A oder B geschwenkt wird. Statt eines Spannarmes 15 können hier auch Schweißbacken, oder ein Spanndorn, oder ein Clinchwerkzeug, angebracht sein. Ein mit zum Beispiel dem Spannarm 5 zusammen wirkendes Widerlager, auch Kiefer genannt, ist aus Gründen der Vereinfachung nicht dargestellt worden. Zwischen solch einem Widerlager und dem Spannarm 15 werden zum Beispiel Vorrichtungsteile wie Bleche oder Baugruppen, wie sie insbesondere im Karosseriebau der Kfz-Herstellung vorkommen, gespannt gehalten, bis sie dauerhaft, zum Beispiel durch Punktschweißen oder durch Clinchen oder durch Kleben, miteinander verbunden sind.

Das eine Kolbenstangenteil 16 ist bei der dargestellten Ausführungsform kraftschlüssig mit dem Verstellkolben 6 verbunden und weist an seiner Außenseite ein Gewinde 17 auf, ist also nach einer Art Schraubspindel ausgebildet. Die kraftschlüssige Verbindung zwischen diesem Kolbenstangenteil 16 und dem Verstellkolben 6 wird im wesentlichen durch die kraft- oder reibschlüssige Verbindung zwischen der Oberfläche eines Abschnittes des Kolbenstangenteils 16 und einem dem Verstellkolben 6 zugeordneten Dichtungselement 18 gebildet, das zum Beispiel als Ringdichtung, ausgebildet sein kann. Statt dessen kann aber auch die Verbindung formschlüssig, zum Beispiel nach Art von Kugelschnäppern, durch eine formschlüssige Verriegelung mittels eines Stiftes, durch Schrauben, Bajonettverschluss oder dergleichen, geschehen.

Das andere Kolbenstangenteil 19 ist in Längsachsrichtung mit einer Sackbohrung 20 versehen, die Innengewinde 21 aufweist, in das das Kolbenstangenteil 16 mehr oder weniger weit in Richtung X oder Y, also axial, einschraubbar ist. Dadurch wird der axiale Abstand des Verstellkolbens 6 von dem Ringkolben 7 entsprechend, z. B. stufenlos, geändert.

Das Kolbenstangenteil 16 durchgreift den Verstellkolben 6 und ist an seinem dem Bodendeckel 5 zugekehrten Längenabschnitt mit einem Bremskolben 22 versehen, der axial eine Ausnehmung 23 zum Ansetzen eines geeigneten Werkzeuges, zum Beispiel eines Mehrkantschlüssels, aufweist. Im Bodendeckel 5 ist eine verschließbare Öffnung 24 angeordnet, durch die ein Werkzeug in die Ausnehmung 23 des Bremskolbens 22 einführbar ist, um diesen und damit das Kolbenstangenteil 16 dann in die eine oder andere Richtung um ihre gemeinsame Längsachse zu drehen und dadurch den Abstand des Verstellkolbens 6 von dem Ringkolben 7 zu verändern. Dies hat dann eine entsprechende Hubveränderung in Richtung X bzw. Y und damit auch eine entsprechende Veränderung des Schwenkwinkels der Kniehebelgelenkanordung 12 und des dieser zugeordneten Vorrichtungsteils, zum Beispiel des Spannarms 15, in Richtung A oder B zur Folge.

Die Öffnung 24 mündet in eine Bremskammer 25 im Bodendeckel 5 aus, der ein Dichtungselement 26 zugeordnet ist, das beim Eintauchen des Bremskolbens 22 in die Bremskammer 25 diese abdichtet. Das Dichtungselement 26 kann so ausgestattet sein, dass es bei Beaufschlagung durch Druckmitteldruck der Bremskammer 25 Fluid, insbesondere Druckluft, diese in den Verstellzylinderraum 27 einströmen lässt, aber in entgegengesetzter Richtung abdichtet. Der andere, dem Ringkolben 7 zugeordnete und durch Fluiddruck, insbesondere Druckluft, zu beaufschlagende Ringzylinderraum ist mit dem Bezugszeichen 28 bezeichnet. Der Zylinderraum 29 wird dagegen in keiner Stellung vom Fluiddruck beaufschlagt, sondern ist über einen Querkanal 60 und einen Längskanal 30 an die Sackbohrung 20 über eine Bohrung 31 angeschlossen und dadurch ständig in den Innenraum 32 des Kopfteils 1 entlüftet. Dieses Kopfteil 1 kapselt sowohl das Kolbenstangenteil 19 als auch die Kniehebelgelenkanordnung 12 und die Gelenke nach außen gegen Schmutz und Feuchtigkeit ab. Hierzu kann das Kopfteil 1 aus mehreren, insbesondere aus zwei sandwichartig und abgedichtet aufeinander liegenden Gehäuseteilen, insbesondere Gehäusehälften, bestehen, die in geeigneter Weise, insbesondere durch Schrauben, nicht dargestellt, lösbar miteinander verbunden sind.

Das Kolbenstangenteil 19 durchgreift die Wand 4 fluiddicht abgedichtet durch ein Dichtelement 33 und ist im Innenraum 32 mit einer Schaltfahne 34 versehen, die eine Sensorvorrichtung 35 bedämpft, die mit geeigneten Mikroschaltern, induktiven Schaltern oder dergleichen versehen sein kann. Die Mikroschalter oder sonstige Sensorelemente können in Richtung X bzw. Y entweder fest oder aber auch intermittierend oder stufenlos verstellbar sein oder über die gesamte Länge bedämpfbare Elemente aufweisen. Der Sensorvorrichtung 35 ist ein geeignetes elektrisches oder elektronisches Bauteil 36 zugeordnet, das die Werte an eine entfernte Überwachungseinheit, zum Beispiel an einen Computer, weiterleitet, der in die Folgesteuerung für die Fluiddruckbeaufschlagung der einzelnen Vorrichtungen eingeschaltet und angeordnet ist (nicht dargestellt). Die Sensorvorrichtung 35 ist durch eine Ausnehmung, insbesondere durch einen Längsschlitz auf der Rückseite der Vorrichtung, angeordnet und verdeckt diesen möglichst staub- und feuchtigkeitsdicht. Sie kann aber auch durch eine geeignete Öffnung in den Innenraum 32 einführbar sein. Dargestellt sind bei der dargestellten Ausführungsform zwei beabstandete Mikroschalter 37 bzw. 38, die auch als induktive Schalter ausgebildet sein können und über die die einzelnen Stellungen des Vorrichtungsteils, zum Beispiel eines Spannarms 15, detektiert werden, das heißt, ob diese sich z. B. in Offenstellung oder in geschlossener Stellung (Arbeitsstellung) befindet.

Wie aus der Zeichnung ersichtlich ist, befindet sich in der einen Zylinderwand ein Längskanal 39, der an einen Querkanal 40 fluidleitend verbunden ist, der wiederum an einen im Bodendeckel 5 angeordneten Kanal 41 angeschlossen ist, der mit der Bremskammer 25 fluidleitend, ggf. über eine Drosselbohrung, in Verbindung steht. Der Kanal 41 mündet in Richtung auf den Bodendeckel 5 hinter dem Dichtelement 26 in die Bremskammer 25 aus und ist auch an die Fluidzu- und Abfuhr angeschlossen, was über den Querkanal 40 geschehen kann. Diese dient somit sowohl der Zufuhr wie ggf. Ableitung von Fluid, z. B. Druckluft. Die Bremskammer 25 ist ihrerseits über einen Verschlussstopfen 42 fluiddicht nach außen abgedichtet. Wird dieser Verschlussstopfen 42 entfernt, sind die Kanäle und damit auch der Verstellzylinderraum 27 entlüftet und mittels eines Werkzeugs ist der Zugang zur Ausnehmung 23 im Bremskolben 22 gegeben.

Der Längskanal 39 mündet über den Querkanal 40 in den Verstellzylinderraum 27 aus. Der Querkanal 40 ist an ein geeignetes Fluidzu- und Ableitungssystem angeschlossen (nicht dargestellt). Dieses Fluid kann Hydraulikflüssigkeit, Druckluft oder eine Quasiflüssigkeit sein, wie sie beim Betreiben von Arbeitszylindern zur Anwendung kommt. Bevorzugt wird man aber im Karrosseriebau der Kfz-Industrie Druckluft verwenden, da diese überall in den Betrieben und insbesondere in Fertigungsstraßen zur Verfügung steht.

Im Abstand von seinem anderen Ende ist der Längskanal 39 mit einem in der Wand 4 angeordneten Abzweigkanal 43 fluidleitend verbunden, während der Längskanal 39 an seinem Ende außerdem in fluidleitender Verbindung mit einem Kanalabschnitt 44 fluidleitend verbunden ist, der in eine Kammer 45 fluidleitend ausmündet. In der Wand 4 ist ein weiterer Kanal 46 angeordnet, der in eine zylindrische Bohrung 47 ausmündet. An diesem Kanal 46 schließt sich ein Kammerkanal 48 an, der an einem Ende fluidleitend mit der Bohrung 47 und an dem anderen Ende in die Kammer 45 ausmündet. In der zylindrischen Bohrung 47 ist eine Steuervorrichtung angeordnet, die vorliegend einen Kolbenschieber 49 umfasst, der längsverschieblich und dichtend in der zylindrischen Bohrung 47 geführt ist und der mit einem gewissen Längenabschnitt in den Ringzylinderraum 28 hineinragt und in der Kammer 45 mit einem Kolben 50 längsverschieblich und dichtend geführt ist. Das Dichtungselement für den Kolben 50 ist aus Gründen der Vereinfachung nicht dargestellt. Die Kammer 45 ist dadurch in zwei Zylinderräume 51 und 52 unterteilt, wobei in den einen Zylinderraum der Kammerkanal 48 fluidleitend ausmündet, während in den anderen, gegenüberliegenden Zylinderraum der Kanalabschnitt 44 fluidleitend ausmündet. Der Kolbenschieber 49 weist einen Längskanal 53 auf, der sich bei der dargestellten Ausführungsform koaxial zu der Längsachse des Kolbenschiebers 49 über einen Teil seiner Länge erstreckt und einen orthogonal zur Längsachse verlaufenden fluidleitenden, an den Längskanal 53 angeschlossenen Zweigkanal 54 aufweist.

Mit dem Bezugszeichen 55 ist eine als Stange ausgebildete Betätigungsvorrichtung für eine Schaltfahne 56 bezeichnet. Die Stange 55 ist mit dem Verstellkolben 6 einstückig, zum Beispiel durch Schraubgewinde 57 fest, aber lösbar, verbunden und durchgreift die Wand 4 durch ein Dichtungselement 58 abgedichtet und ragt in jeder Stellung des Verstellkolbens 6 in den Innenraum 32 des Kopfteils 1 hinein. Wird der Verstellkolben 6 durch mehr oder weniger weites Einschrauben des Kolbenstangenteils 16 in dem Innengewinde 21 des Kolbenstangenteils 19 verstellt, erfolgt dadurch auch die richtige Einstellung der Schaltfahne 56, so dass gemeinsam mit der Verstellung des Schwenkwinkels der Kniehebelgelenkanordnung 12 und des damit verbundenen Vorrichtungsteils, zum Beispiel des Spannarms 15 in Richtung A bzw. B, auch gleichzeitig die Sensorvorrichtung richtig eingestellt wird. Die Schaltfahne 34 kann dagegen im Bedarfsfalle stets ortsfest mit dem Kolbenstangenteil 19 verbunden sein. Da sich beim Verstellen des Schwenkwinkels der Kolbenzylindereinheit nur das Kolbenstangenteil 16 in die eine oder andere Richtung dreht, verändert der Verstellkolben 6 seine Winkelstellung in Bezug auf den Zylinder 3 nicht, zumal wenn die Innenwand 10 unrund, zum Beispiel rechteckförmig, elliptisch, quadratisch oder dergleichen, ausgebildet ist. Dadurch bleibt die relative Lage der Schaltfahne 56 in Bezug auf die Sensorvorrichtung 35 erhalten und braucht nicht nachjustiert zu werden.

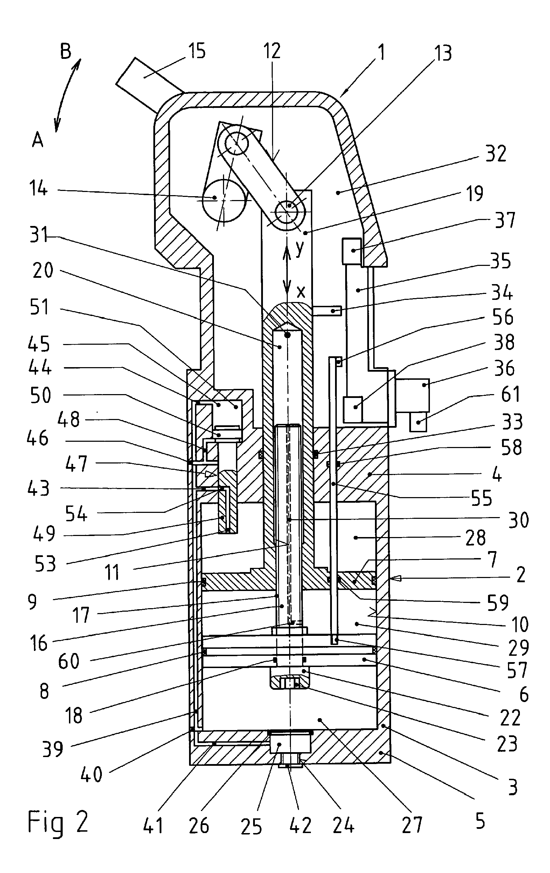

Die Wirkungsweise der aus der Zeichnung ersichtlichen Ausführungsform ist folgende:
Bei der zum Beispiel aus Fig. 2 ersichtlichen Lage der Teile ist der Querkanal 40 an eine nicht dargestellte Fluidquelle, zum Beispiel an eine Druckluftquelle, angeschlossen, die das unter Druck stehende Fluid, zum Beispiel Druckluft, liefert. Dadurch wird der Verstellzylinderraum 27 mit Druckmitteldruck, insbesondere mit Druckluft, befüllt. Gleichzeitig pflanzt sich dieser Druckmitteldruck über den Längskanal 39 und den Abzweigkanal 43 sowie den Zweigkanal 54 im Kolbenschieber 49 und den Längskanal 53 im Kolbenschieber 49 auch in den Ringzylinderraum 28 fort und beaufschlagt diesen ebenfalls mit Druckmitteldruck, insbesondere mit Druckluft. Da die wirksame Kolbenfläche im Ringzylinderraum 28 geringer ist als die druckwirksame Fläche im Verstellzylinderraum 27, ergibt sich eine Differenzkraft, die bei dieser angenommenen Stellung der Teile in Richtung Y, also in Schließstellung und damit den Spannarm 15 in Richtung A schwenkt.

Statt eines Spannarms 15 können auch andere Vorrichtungsteile, die zum Beispiel beim Spannen, Pressen, Fügen, Stanzen, Prägen, Lochen oder Schweißen erforderlich sind, entsprechend angetrieben werden. Beim Leerhub, also beim Anstellhub, ist nur eine geringe Antriebskraft zur Überwindung der Reibkräfte und ggf. Gewichtswiderstände erforderlich. Infolgedessen verringert sich beim Leerhub (Anstellhub) die erforderliche Antriebsenergie entsprechend der druckwirksamen Flächen in der Antriebseinheit, zum Beispiel ca. 70 % oder mehr. Man kann dies auch durch die Wahl der druckwirksamen Kolbenflächen bestimmen, zum Beispiel dadurch, dass man den Querschnitt des Kolbenstangenteils 19 entsprechend variiert.

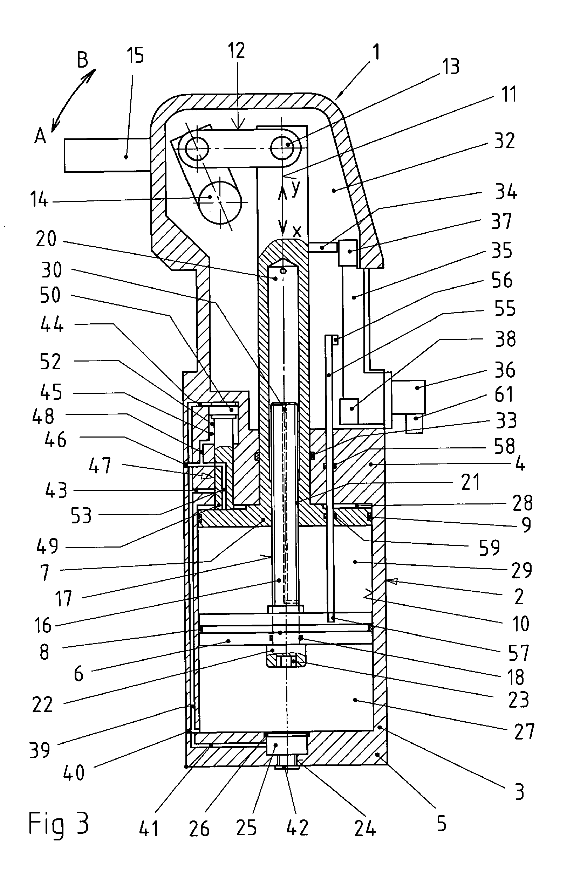

Trifft bei der weiteren Verschiebung des Verstellkolbens 6 und des Ringkolbens 7 der Ringkolben 7 auf die Stirnseite des Kolbenschiebers 49 auf, so wird dieser in seiner Längsachsrichtung ebenfalls in Hubrichtung des Ringkolbens 7 in der Wand 4 verschoben, bis er die aus Fig. 3 ersichtliche Stellung erreicht hat. In dieser Stellung ist der Abzweigkanal 43 von dem Ringzylinderraum 28 abgesperrt und über den Längskanal 53 im Kolbenschieber 49 und seinen Zweigkanal 54 an den Kanal 46 fluidleitend angeschlossen, wodurch der Ringzylinderraum 28 an eine Rückleitung angeschlossen bzw. entlüftet wird. Diese Rückleitung oder Entlüftung wird bei der entgegengesetzten Hubrichtung wieder für die Zuführung des Druckmitteldruckes, insbesondere für Zuführung von Druckluft, benötigt.

Während des Anstellhubes (Leerhub) in Richtung Y wird die vom Ringkolben 7 verdrängte Fluidmenge über den Längskanal 53 im Kolbenschieber 49, den Abzweigkanal 43 in den Längskanal 39 und über diesen über den Querkanal 40 und gegebenenfalls über den Kanal 41 dem Verstellzylinderraum 27 zugeführt, so dass während des Leerhubes die vom Ringkolben 7 verdrängte Fluidmenge für den Antrieb nicht verloren geht, sondern lediglich die Differenz zum Antrieb ersetzt zu werden braucht, die je nach Einstellung des Verstellkolbens 6 zum Ringkolben 7 und damit der Einschraublänge des Kolbenstangenteils 16 in das Kolbenstangenteil 19 variieren kann.

Werden Kolbenstangenteile 16, 19 in Richtung Y bewegt, dann wird durch eine nicht dargestellte Steuerungsvorrichtung für die Fluidzufuhr, insbesondere für die Druckluftzufuhr, der Querkanal 40 mit Druckmitteldruck beaufschlagt, der bei der Stellung der Teile gemäß Fig. 3 sich über den Längskanal 39 und den Kanal 46 über den Längskanal 53 in den Ringzylinderraum 28 fortpflanzt. Über den Kammerkanal 48 pflanzt sich der Druckmitteldruck auch unter den Kolben 50 bis in die Kammer 45 fort und hält den Kolbenschieber 49 in seiner aus Fig. 3 ersichtlichen Stellung. Die Kolbenstangenteile 16, 19 sowie der Ringkolben 7 und der Verstellkolben 6 bewegen sich dadurch in Richtung Y und schwenken die Kniehebelgelenkanordnung 12 in Richtung B, so dass sich ein damit gekuppelter Spannarm 15 oder dergleichen ebenfalls in Richtung B bewegt, also in Offenstellung schwenkt. Bei einem Spannarm kann zum Beispiel der Schwenkwinkel in Richtung A bzw. B von 0 bis 135 Grad oder darüber hinaus betragen. Die Teile bewegen sich dann so lange, bis der Bremskolben 22 in die Bremskammer 25 eintritt und das Dichtelement 26 dadurch den Verstellzylinderraum 27 absperrt. Von da ab kann das Fluid lediglich über eine Drosselbohrung (nicht dargestellt) in den Kanal 41 bzw. 40 entweichen und dem Rücklauf zugeführt werden. Da der Abfluss des in dem Verstellzylinderraum 27 befindlichen Druckmittels, zum Beispiel Druckluft, dadurch verzögert erfolgt, geschieht hierdurch ein weiches Anfahren bzw. Offenbewegung der Vorrichtung, so dass ein hartes Anschlagen des Verstellkolbens 6 an den Bodendeckel 5 vermieden wird.

Wird eine Bewegung der Teile in Richtung X gewünscht (Leerhub, Anstellhub), pflanzt sich der Fluiddruck, zum Beispiel Druckluftdruck, wiederum über den Querkanal 40, den Längskanal 39 zu dem Abzweigkanal 43 und auch über den Kanalabschnitt 44 fort und beaufschlagt den Kolben 50, woraufhin sich der zuvor beschriebene Arbeitszyklus wiederholen kann, da dann der Kolbenschieber 49 wiederum in seiner aus Fig. 1 ersichtlichen Stellung in Richtung X verschoben wird, bis er wieder durch den Ringkolben 7 in seiner aus Fig. 3 ersichtlichen Steuerstellung sich verschiebt.

Wie man erkennt, wird beim Betätigen des Kolbenschiebers 49 der volle Druckmitteldruck auf die druckwirksame Fläche des Verstellkolbens 6 wirksam. Beim Anstellhub wird nur das durch die Kolbenstange im Ringraum bestimmte Druckmittelvolumen stets durch die Druckmittelquelle, z. B. durch einen Drucklufterzeuger, ergänzt, so dass Betriebskosten eingespart werden können. Lediglich eine sehr geringe Restmenge an Druckmittel, insbesondere an Druckluft, wird entlüftet. Beim Anstellhub einer Kniehebelspannvorrichtung oder dergleichen brauchen also lediglich die zu überwindenden Reibungskräfte und gegebenenfalls Trägheitskräfte überwunden zu werden. Es erfolgt somit ein im Mittel mindestens 50prozentig reduzierter Fluid, insbesondere Druckluftverbrauch bei gleichen technischen Leistungsdaten und Abmaßen. Die erfindungsgemäße Vorrichtung vereinigt somit einen energieeffizienten Antrieb bei Umweltschonung und die Möglichkeit, den Hub und damit den Winkel, um den die über ein Kniehebelgelenk angetriebenen Teile bewegt werden können, von außen aus ohne Zerlegung der Vorrichtung in beiden Richtungen stufenlos zu verändern und in der jeweils gewünschten Stellung einzureichen bei gleichzeitiger Verstellung der Abfragevorrichtung, ohne dass diese bei der Verstellung des Schwenkwinkels nachjustiert zu werden brauchte.

Das Bezugszeichen 60 bezeichnet einen Querkanal und die Bezugszeichen 58 bzw. 59 Dichtelemente für die druckmitteldichte Hindurchführung der Stange 55. 61 ist ein Stecker, durch den die Daten, die die Sensorvorrichtung 35 abfragt, an eine entfernte Datensammelstelle weiterleitbar sind.

### Bezugszeichen

- 1: Spannkopf, Kopfeinheit
- 2: Antriebseinheit
- 3: Zylinder
- 4: Wand
- 5: Bodendeckel
- 6: Verstellkolben
- 7: Ringkolben
- 8: Dichtungselement
- 9: "
- 10: Innenwand
- 11: Mittellinie
- 12: Kniehebelgelenkanordnung
- 13: Gelenk
- 14: Achse, gehäusefeste
- 15: Vorrichtungsteil, Spannarm, Zentrierdorn, Schweißbacke, Clinchwerkzeug
- 16: Kolbenstangenteil
- 17: Gewinde
- 18: Dichtungselement
- 19: Kolbenstangenteil
- 20: Sackbohrung
- 21: Innengewinde
- 22: Bremskolben
- 23: Ausnehmung
- 24: Öffnung
- 25: Bremskammer
- 26: Dichtelement
- 27: Verstellzylinderraum
- 28: Ringzylinderraum
- 29: Zylinderraum
- 30: Längskanal
- 31: Bohrung
- 32: Innenraum
- 33: Dichtelement
- 34: Schaltfahne
- 35: Sensorvorrichtung
- 36: Bauteil
- 37: Mikroschalter
- 38: "
- 39: Längskanal
- 40: Querkanal
- 41: Kanal
- 42: Verschlussstopfen
- 43: Abzweigkanal
- 44: Kanalabschnitt
- 45: Kammer
- 46: Kanal
- 47: Bohrung, zylindrische
- 48: Kammerkanal
- 49: Kolbenschieber, Steuervorrichtung
- 50: Kolben
- 51: Zylinderraum
- 52: "
- 53: Längskanal
- 54: Zweigkanal
- 55: Stange, Betätigungsteil
- 56: Schaltfahne
- 57: Schraubgewinde
- 58: Dichtungselement
- 59: "
- 60: Querkanal
- 61: Stecker

- X: Hubrichtung
- Y: "
- A: Schwenkrichtung
- B: "

### Literaturverzeichnis

- DE: 10 2006 041 707 A1
- DE: 10 2004 007 346 B3
- DE: 10 2008 007 256 B3
- DE: 10 2007 027 849 A1
- DE: 698 10 413 T3
- DE: 198 24 579 C1
- DE: 101 36 057 C1
- DE: 195 12 429 A1
- DE: 19 41 785
- DE: 196 16 441 C1
- DE: 202 07 776 U1
- DE: 36 38 526 C1
- DE: 42 42 601 A1

- DE: 298 11 331 U1

- EP: 2 055 430 B1
- EP: 1 262 285 A2
- EP: 1 849 559 B1
- EP: 1 878 539 B1
- EP: 1 309 426 B1
- EP: 0 908 272 B1
- EP: 0 967 050 A2
- EP: 1 088 623 A2
- EP: 1 179 394 A
- EP: 1 149 665 A
- EP: 1 066 929 A
- EP: 0 243 599 A

- WO: 2005/044517 A2
- WO: 2007/128437 A1

- US: 4,793,602
- US: 6,065,743
- US: 6,612,557
- US: 6,220,588
- US: 6,613,133
- US: 6,416,045

## Patentansprüche

1. Durch Druckluft angetriebene, energieeffiziente, mit Doppelkolbenfunktion ausgerüstete Vorrichtung zum Spannen, oder zum Klemmen, oder zum Zentrieren, oder zum Lochen, oder zum Schweißen, oder zum Clinchen, zur Verwendung im Karosseriebau der Kfz-Industrie, mit einer als Kolben-Zylinder-Einheit ausgebildeten Antriebseinheit (2), der die Druckluft zuführbar ist und einer sich koaxial daran anschließenden Kopfeinheit (1), in der eine Kniehebelgelenkanordnung (12) an einer in der Kopfeinheit (1) gelagerten ortsfesten Achse (14) schwenkbeweglich angeordnet ist, wobei die Kniehebelgelenkanordnung (12) mit einer mehrteiligen, längenverstellbaren, und in der gewünschten Länge auch arretierbaren sich in Achsrichtung der Antriebseinheit (2) erstreckenden Kolbenstange (16, 19) verbunden ist und in dem Zylinder (3) der Antriebseinheit (2) mit axialem Abstand zueinander ein Ringkolben (7) und ein Verstellkolben (6) unter der Einwirkung der Druckluft längsverschieblich und dichtend geführt sind und der Ringkolben (7) mit der Kniehebelgelenkanordnung (12) durch ein Kolbenstangenteil (19) über ein Gelenk (13) gelenkbeweglich verbunden ist und der Verstellkolben (6) mit einem zweiten Kolbenstangenteil (16) gekuppelt ist, und dass in jeder Hubstellung und in jeder Einstellung des Ringkolbens (7) und des Verstellkolbens (6) der zwischen dem Ringkolben (7) und dem Verstellkolben (6) angeordnete Zylinderraum (29), je nach Einstellung des Ringkolbens (7) und des Verstellkolbens (6), sich vergrößert oder verkleinert, **dadurch gekennzeichnet, dass** der Zylinderraum (29) je nach Einstellung des Ringkolbens (7) und des Verstellkolbens (6) zueinander sich vergrößernde oder verkleinernde Zylinderraum (29) in jeder Stellung von der Druckluft abgesperrt ist und dass der Ringkolben (7) über eine Steuervorrichtung (49) während eines Anstellhubes (Leerhub) die vom Ringkolben (7) verdrängte Druckluftmenge über ein Kanalsystem (39) in den Verstellzylinderraum (27) der druckwirksamen Kolbenfläche des Verstellkolbens (6) steuert und leitet und erst mit Beendigung des Leerhubes bei Betätigung des Steuerventils (49) die vom Ringkolben (7) verdrängte restliche Druckluftmenge aus dem Ringzylinderraum (28) über einen Kanal an einen Rücklauf angeschlossen ist, wobei bei oder kurz nach Betätigung der Steuervorrichtung (49) der volle Luftdruck die druckwirksame Fläche des Verstellkolbens (6) beaufschlagt und den Krafthub bewirkt, wobei der zwischen dem Verstellkolben (6) und dem Ringkolben (7) befindliche Zylinderraum (29) durch einen in der Kolbenstange oder einem Kolbenstangenteil (16) verlaufenden und an einem Ende über eine Bohrung (31) in den Innenraum (32) des Kopfteils (1) ausmündenden Längskanal (30) entlüftet ist.

2. Vorrichtung nach Anspruch 1, **dadurch gekennzeichnet, dass** der Ringkolben (7) einen Kolbenschieber (49) und darin angeordnete, Druckluft leitende Kanäle und deren Anschlüsse an in Wandungen der Vorrichtung angeordneten Kanälen (39, 40) für den Anschluss an die Druckluftzufuhr und - abfuhr sowie Umleitung zu dem Verstellzylinderraum (27) des Verstellkolbens (6) mit der druckwirksamen Fläche desselben steuert.

3. Vorrichtung nach Anspruch 2, **dadurch gekennzeichnet, dass** der Kolbenschieber (49) in einer Wand (4) angeordnet ist, die den Ringzylinderraum (28) des Ringkolbens (7) von einem Innenraum (32) des Kopfteils (1), zum Beispiel dem Spannkopf (1) einer Kniehebelspannvorrichtung, druckmitteldicht trennt, wobei auch in diesem Innenraum (32) die Kniehebelgelenkanordnung (12) vorzugsweise nach außen hin allseitig gegen Verunreinigungen abgekapselt angeordnet ist.

4. Vorrichtung nach Anspruch 1 oder einem der Ansprüche 2 und 3, **dadurch gekennzeichnet, dass** der Verstellkolben (6) mit einem Betätigungsteil (55) verbunden ist, das an seinem Ende eine Schaltfahne (56) aufweist.

5. Vorrichtung nach Anspruch 4, **dadurch gekennzeichnet, dass** das Betätigungsteil als Stange (55) ausgebildet ist, die den Ringkolben (7) und die Wand (4), die den Innenraum (32) des Kopfteils (1) trennt, abgedichtet durchgreift.

6. Vorrichtung nach Anspruch 1 oder einem der darauf folgenden Ansprüche, **dadurch gekennzeichnet, dass** das eine mit der Kniehebelgelenkanordnung (12) und dem Ringkolben (7) verbundene Kolbenstangenteil (19) eine Sackbohrung aufweist, die mit Innengewinde (21) versehen ist, in die das andere mit dem Verstellkolben (6) verbundene Kolbenstangenteil (16) über Außengewinde (17) von außen durch den Bodendeckel (5) der Antriebseinheit (2) verstellbar und in der jeweils gewünschten Stellung auch arretierbar ist.

7. Vorrichtung nach Anspruch 1 oder einem der Ansprüche 2 bis 6, **dadurch gekennzeichnet, dass** das mit dem Verstellkolben (6) versehene Kolbenstangenteil (16) mit einer Sackbohrung mit Gewinde versehen ist, in die der Ringkolben (7) mit einem als Schraubbolzen ausgebildeten Kolbenstangenteil über ein Gewinde einschraubbar und durch den Bodendeckel (5) der Antriebseinheit (2) verstellbar ist.

8. Vorrichtung nach Anspruch 1 oder einem der darauf folgenden Ansprüche, **dadurch gekennzeichnet, dass** dem Verstellkolben (6) an seiner dem Kopfteil (1) abgekehrten Seite ein Bremskolben (22) zugeordnet ist, der in der Offenstellung abgedichtet in eine Bremskammer (25) des Bodens (5) eingreift.

9. Vorrichtung nach Anspruch 1 oder einem der darauf folgenden Ansprüche, **dadurch gekennzeichnet, dass** der zwischen dem Verstellkolben (6) und dem Bodendeckel (5) befindliche Verstellzylinderraum (27) über einen Drosselkanal an die Fluidzufuhr und Fluidabfuhr und an das Kanalsystem (40, 39) zum Ringzylinderraum (28) sowie an eine Bremskammer (25) im Bodendeckel (5) angeschlossen ist.

## Claims

1. Compressed-air powered, energy-efficient device with double-piston function for gripping, clamping, centring, perforating, welding or clinching, for use in bodywork-construction in the automotive industry, with a power unit (2) formed as a piston-cylinder unit, to which the compressed air is fed, and a head unit (1) connected coaxially thereto, in which a toggle-joint arrangement (12) is arranged to pivot on an stationary axis (14) fixed in the head unit (1) where the toggle-joint arrangement (12) is connected to a multi-part piston rod (16, 19) which is adjustable in length and lockable at the desired length and extends in the axial direction of the power unit (2) and, in which cylinder (3), at an axial distance from one another, an annular piston (7) and a regulating piston (6) are moved lengthwise by the compressed air, thereby forming a seal, and the annular piston (7) is joined movably to the toggle-joint arrangement (12) by a part (19) of the piston rod via a hinge (13), and the regulating piston (6) is coupled to a second part (16) of the piston rod, and that at each stroke position and at each setting of the annular piston (7) and regulating piston (6), the cylinder compartment (29) located between the annular piston (7) and regulating piston (6) increases or decreases in size depending on the setting of the annular piston (7) and the regulating piston (6), **characterised in that** the cylinder compartment (29), increasing or decreasing in size depending on the setting of the annular piston (7) and the regulating piston (6) with reference to one another, is cut off from the compressed air at every position, and that the annular piston (7), by means of a control device (49), controls and feeds the quantity of compressed air displaced by the annular piston (7) during the return stroke, via a duct system (39) into the regulating-cylinder compartment (27) of the pressurising piston surface of the regulating piston (6), and only on completion of the return stroke, when the control valve (49) is activated, the remaining compressed air displaced from the annular-cylinder compartment (28) by the annular piston (7) is connected via a duct to a return flow, where the full air pressure acts on the pressurising surface of the regulating piston (6) on or shortly after activation of the control device (49) thus effecting the power stroke, where the cylinder compartment (29) between the regulating piston (6) and the annular piston (7) is vented by a longitudinal duct (30) in the piston rod or part (16) of the piston rod, which discharges into the interior (32) of the head part (1) through a bore (31) at one end.

2. Device in accordance with claim 1, **characterised in that** the annular piston (7) controls a piston slide valve (49) and compressed-air ducts arranged therein and their connections to ducts (39, 40) arranged in the walls of the device for the connection to the compressed-air inlet and outlet as well as its diversion to the regulating-cylinder compartment (27) of the regulating cylinder (6) with its pressurising surface.

3. Device in accordance with claim 2, **characterised in that** the piston slide valve (49) is arranged in a wall which separates and seals off from the pressure medium, the annular-cylinder compartment (28) of the annular cylinder (7) from an inner compartment (32) of the head part (1), for example the clamping head (1) of a toggle lever clamping device, where the toggle-joint arrangement (12) is preferably encapsulated outwardly on all sides to prevent contamination with dirt.

4. Device in accordance with claim 1 or either of the claims 2 and 3, **characterised in that** the regulating piston (6) is connected to an activating element (55) which has a switching flag (56) at its end.

5. Device in accordance with claim 4, **characterised in that** the activating element is formed as a rod (55) which passes through and seals the annular piston (7) and the wall (4) separating the inner compartment (32) of the head part (1).

6. Device in accordance with claim 1 or any of the subsequent claims, **characterised in that** one part (19) of the piston rod connected to the toggle-joint arrangement (12) and the annular piston (7) has a blind hole with an interior thread (21) into which the other part (16) of the piston rod connected to the regulating piston (6) can be adjusted by the exterior thread (17) from the outside through the floor plate (5) of the power unit (2) and locked in the desired position.

7. Device in accordance with claim 1 or any of the claims 2 to 6, **characterised in that** the part (16) of the piston rod connected to the regulating piston (6) has a blind hole with a thread into which the annular piston (7) can be screwed by means of part of the piston rod formed as a bolt and adjusted through the floor plate (5) of the power unit (2).

8. Device in accordance with claim 1 or any of the subsequent claims, **characterised in that** the regulating piston (6) has a brake piston (22) on the side facing away from the head part (1), which, in the open position, engages and seals a brake chamber (25) in the floor (5).

9. Device in accordance with claim 1 or any of the subsequent claims, **characterised in that** the regulating-cylinder compartment (27) located between the regulating piston (6) and the floor plate (5) is connected to the fluid inlet and outlet by a throttle duct and to the duct system (40, 39) to the annular-cylinder compartment (28) and to a brake chamber (25) in the floor plate (5).

## Revendications

1. Dispositif entraîné par air comprimé, efficace en énergie, équipé d'un fonction à double piston permettant de serrer, ou brider, ou centrer, ou perforer, ou souder, ou clincher, à utiliser dans la construction de carrosseries automobiles, comprenant une unité d'entraînement (2) configurée sous forme d'unité à piston et vérin à laquelle il est possible d'amener de l'air comprimé, et avec une unité têtière (1) s'y raccordant coaxialement, unité têtière dans laquelle un montage à genouillère (12) est agencé contre un axe fixe (14) en appui dans l'unité têtière (1) pour pouvoir pivoter, sachant que le montage à genouillère (12) est relié à une tige de piston (16, 19) en plusieurs parties, ajustable en longueur et blocable également sur la longueur voulue, s'étendant en direction axiale de l'unité d'entraînement (2), et que dans le vérin (3) de l'unité d'entraînement (2) sont guidés de façon étanchéisante et par coulissement longitudinal, à une distance maximale l'un de l'autre, un piston annulaire (7) et un piston ajustable (6) sous l'action de l'air comprimé, et que le piston annulaire (7) est relié au montage à genouillère (12) est relié par une pièce (19) à tige de piston via une articulation (13) permettant un mouvement articulé, et que le piston d'ajustage (6) est accouplé à une deuxième pièce (16) à tige de piston, et que dans chaque position de course et sur chaque réglage du piston annulaire (7) et du piston d'ajustage (6), la cavité de vérin (29) située entre le piston annulaire (7) et le piston d'ajustage (6) augmente ou diminue de volume suivant le réglage du piston annulaire (7) et du piston d'ajustage (6) **caractérisé en ce que** la cavité du vérin (29) qui s'agrandit ou rapetisse en fonction du réglage du piston annulaire (7) et du piston d'ajustage (6) est obturée (29) par l'air comprimé en toute position, et **en ce que** le piston annulaire (7) pilote et guide - via un dispositif de commande (49), pendant une course d'approche, (course à vide) - la quantité d'air refoulée par le piston annulaire (7) via un système de canaux (39) en direction de la cavité (27) du vérin d'ajustage de la surface du piston d'ajustage (6) agissant sur la pression et que ce n'est qu'à la fin de la course à vide, lorsque la vanne de commande (49) a été actionnée, que la quantité d'air comprimé restante refoulée par le piston annulaire (7) hors de la cavité de piston annulaire (28) est raccordée via un canal à un circuit de retour, sachant qu'au moment où le dispositif de commande (49) est actionné ou peu après, la surface pneumatiquement efficace du piston d'ajustage (6) est mise sous l'intégralité de la pression de l'air et provoque la course en force, sachant que la cavité de vérin (29) située entre le piston d'ajustage (6) et le piston annulaire (7) est dégazée par un canal longitudinal (30) circulant à travers la tige de piston ou une pièce (16) de tige de piston et débouchant à une extrémité, via un alésage (31), dans le compartiment intérieur (32) de la partie têtière (1).

2. Dispositif selon la revendication 1, **caractérisé en ce que** le piston annulaire (7) pilote un tiroir (49) de piston ainsi que des canaux agencés dedans guidant l'air comprimé et leurs raccords vers des canaux (39, 40) agencés dans des parois du dispositif pour le raccordement à l'alimentation en air comprimé et à l'évacuation de ce dernier, ainsi que le renvoi vers la cavité du vérin d'ajustage (27) du piston d'ajustage (6), par la surface de ce piston agissant sur la pression.

3. Dispositif selon la revendication 2, **caractérisé en ce que** le tiroir de piston (49) est agencé dans une paroi (4) qui sépare, de manière étanche aux fluides, la cavité (28) du vérin annulaire du piston annulaire (7) par rapport à une cavité intérieure (32) de la pièce têtière (1), par exemple de la tête de serrage (1) d'un dispositif à genouillère, sachant que dans cette cavité intérieure (32) aussi le montage (12) avec articulation à genouillère est agencé de préférence étanchéisé en direction de l'extérieur, sur tous les côtés, contre les impuretés.

4. Dispositif selon la revendication 1 ou l'une des revendications 2 et 3, **caractérisé en ce que** le piston d'ajustage (6) est relié à une pièce d'actionnement (55) présentant un drapeau de commutation (56) en son extrémité.

5. Dispositif selon la revendication 4, **caractérisé en ce que** la pièce d'actionnement est configurée en barre (55) qui traverse, tout en étanchéisant, le piston annulaire (7) et la paroi (4) qui sépare la cavité intérieure (32) de la pièce têtière (1).

6. Dispositif selon la revendication 1 ou l'une des revendications suivantes, **caractérisé en ce que** la pièce (19) de tige de piston reliée au montage (12) avec articulation à genouillère et au piston annulaire (7) comporte un alésage borgne présentant un taraudage (21) dans lequel l'autre pièce (16) de tige de piston reliée au piston d'ajustage (6) est ajustable de l'extérieur via des filetages externes (17), à travers le couvercle de fond (5) de l'unité d'entraînement (2) et blocable également dans la position respectivement souhaitée.

7. Dispositif selon la revendication 1 ou l'une des revendications 2 à 6, **caractérisé en ce que** la pièce de tige de piston (16) équipée du piston d'ajustage (6) est dotée d'un alésage borgne taraudé dans lequel il est possible de visser le piston annulaire (7) avec une pièce de tige de piston configurée en goujon à visser via un filetage, et qu'il est possible d'ajuster à travers le couvercle (5) de fond de l'unité d'entraînement (2).

8. Dispositif selon la revendication 1 ou l'une des revendications suivantes, **caractérisé en ce qu'**un piston de freinage (22) est affecté au piston d'ajustage (6) sur son côté ne regardant pas la pièce têtière (1), piston de freinage qui en position desserrée pénètre de manière étanchéisée dans une chambre de freinage (25) du fond (5).

9. Dispositif selon la revendication 1 ou l'une des revendications suivantes, **caractérisé en ce que** la cavité (27) du vérin d'ajustage située entre le piston d'ajustage (6) et le couvercle de fond (5) est raccordée via un canal d'étranglement à l'amenée de fluide et à l'évacuation de fluide, et au système de canaux (40, 39) aboutissant à la cavité (28) du vérin annulaire, ainsi qu'à une chambre de freinage (25) dans le couvercle du fond (5).
